# EUROPEAN PATENT APPLICATION

(11) **EP 3 035 475 A1**
(43) Date of publication of application: **22.06.2016**
(21) Application number: 14835877.3
(22) Date of filing: 22.05.2014
(51) Int. Cl.: H02H 9/06

(54) **SURGE PROTECTION DEVICE AND METHOD**

(30) Priority: 13.08.2013 CN 201310351828
(71) Applicant: ZTE Corporation, Shenzhen, Guangdong 518057 (CN)
(72) Inventor: ZHAO, Caijun, Shenzhen Guangdong 518057 (CN); HU, Jun, Shenzhen Guangdong 518057 (CN); HAN, Ping, Shenzhen Guangdong 518057 (CN); LAN, Menghua, Shenzhen Guangdong 518057 (CN)
(74) Representative: Carangelo, Pierluigi
(86) International application number: PCT/CN2014/078193
(87) International publication number: WO 2015/021801

(57) **Abstract**

A surge protection device and method are provided. The device includes a switch protector (10) with at least three electrodes. When an inter-electrode voltage between two electrodes of the at least three electrodes of the switch protector (10) reaches a preset value, electric current is conducted between the two electrodes. The at least three electrodes are connected to a Null (N) wire, a Protection Earth (PE) wire and at least one Live (L) wire of an alternating current system respectively. The surge protection device and method solve the problem that a Power Line Communication (PLC) signal is significantly attenuated when a voltage dependent resistor is directly bridged on a power wire, and the quality of the PLC signal on the power wire is guaranteed.

## Description

### Technical Field

The present disclosure relates to the field of communications, and particularly to a surge protection device and method.

### Background

A Power Line Communication (PLC) terminal is an indoor network terminal device using a power wire transmitting an alternating current as a communication medium. Accordingly, an alternating current power port of the PLC terminal is also its communication port. The PLC terminal not only obtains an alternating current with a working frequency of 50Hz to 60Hz through this port, but also transmits a PLC signal with a working frequency of several megahertz or even hundreds of megahertz through this port.

Usually, surge interference jeopardizing the security of the device will be generated on the power line due to an impact of a lightning stroke or a change of a load of the alternating current network. The alternating current power port of the PLC terminal should be provided with a satisfactory surge protection capability, including common-mode protection and differential-mode protection, in order to prevent the PLC terminal from being damaged by the surge interference. In the meanwhile, a surge protection circuit of the port should provide a sufficient protection capability without affecting the PLC communication performance, since the alternating current power port of the PLC terminal has to transmit not only a low frequency alternating current, but also a PLC signal of a radio frequency. In addition, the PLC terminal is also required to be designed with a miniature size at a low cost as a communication terminal applied indoors.

In a related technology, a single-phase alternating current power port including a Protection Earth (PE) wire usually uses one or more voltage dependent resistors respectively bridged among a Live (L) wire, a Null (N) wire and the PE wire to provide common-mode protection and differential protection. In the meanwhile, the PLC signal will be significantly attenuated if the voltage dependent resistor having an extremely large parasitic capacitance is directly bridged to a power wire, thereby seriously affecting the communication performance of a PLC terminal, and a special protection requirement of an alternating current power port of the PLC terminal cannot be satisfied.

Taking both the protection capability and the communication capability into account, the protection circuits of alternating current power ports of PLC terminals in related technologies have disadvantages of complicated circuits, large number of protection devices, high costs, and large occupied structural spaces and so on, which reduces the reliability of the circuits and fails to satisfy design requirements of low cost and miniaturization of the PLC terminals.

At present, there is no effective solution for solving the problem that a PLC signal is significantly attenuated when a voltage dependent resistor is directly bridged on a power wire.

### Summary

Embodiments of the present disclosure provide a surge protection device and method to at least solve the problem that a PLC signal is significantly attenuated when a voltage dependent resistor is directly bridged on a power wire.

A surge protection device is provided according to an aspect of the embodiments of the present disclosure, including: a switch protector with at least three electrodes and configured to, when an inter-electrode voltage between two electrodes of the at least three electrodes reaches a preset value, conduct electric current between the two electrodes, wherein the at least three electrodes are respectively connected to an N wire, a PE wire and at least one L wire of an alternating current system in parallel.

In an example embodiment, the device further includes: at least one fuse, connected on the at least one L wire in series, wherein a voltage on the at least one L wire is transmitted to the switch protector through the at least one fuse.

In an example embodiment, at least one of the at least three electrodes is connected with the at least one L wire through at least one first voltage dependent resistor respectively, and one of the other electrodes in the at least three electrodes is connected with the N wire through a second voltage dependent resistor, wherein a parameter of the first voltage dependent resistor is the same as a parameter of the second voltage dependent resistor.

In an example embodiment, output ends of the N wire include at least two outlet N wires, output ends of the PE wire include at least two outlet PE wires and output ends of each of the at least one L wire include at least two outlet L wire respectively, wherein the at least two outlet N wires, the at least two outlet PE wire and the at least two outlet L wires of each of the at least one L wire form at least two output groups.

In an example embodiment, a first output group in the at least two output groups includes: high frequency suppressors, respectively connected on the outlet L wire of each of the at least one L wire and the outlet N wire in the first output group in series, and configured to suppress a high frequency signal in the alternating current system to obtain an output alternating current.

In an example embodiment, the first output group further includes: a first surge suppressor, at least connected with the outlet N wire and the outlet L wire transmitting the output alternating current in the first output group in parallel, and configured to suppress a surge generated on the outlet N wire and the outlet L wire transmitting the output alternating current.

In an example embodiment, a second output group in the at least two output groups includes: low frequency suppressors, respectively connected on the outlet L wire of each of the at least one L wire and the outlet N wire in the second output group in series, and configured to suppress a low frequency signal in the alternating current system to obtain an output signal.

In an example embodiment, the second output group further includes: a second surge suppressor, at least connected with the outlet N wire and the outlet L wire transmitting the output signal in the second output group in parallel, and configured to suppress a surge generated on the outlet N wire and the outlet L wire transmitting the output signal.

A surge protection method is provided according to another aspect of the embodiments of the present disclosure, including that when an inter-electrode voltage between two electrodes in at least three electrodes of a switch protector reaches a preset value, electric current is conducted between the two electrodes, wherein the at least three electrodes are respectively connected to an N wire, a PE wire and at least one L wire of an alternating current system in parallel.

In an example embodiment, the method further includes that an output alternating current and an output signal in output ends protected by the switch protector are separated; and surge protection is performed for the output alternating current and the output signal respectively.

By means of the embodiments of the present disclosure, electric current is conducted between two electrodes of the at least three electrodes of a switch protector when an inter-electrode voltage between the two electrodes reaches a preset value, wherein the at least three electrodes are connected to an N wire, a PE wire and at least one L wire of an alternating current system in parallel respectively, thereby solving the problem that a PLC signal is significantly attenuated when a voltage dependent resistor is directly bridged on a power wire, and guaranteeing the quality of the PLC signal on the power wire.

### Brief Description of the Drawings

The accompanying drawings illustrated herein are used for providing further understanding to the present disclosure and constitute a part of the application. The exemplary embodiments of the present disclosure and the illustration thereof are used for explaining the present disclosure, instead of constituting an improper limitation to the present disclosure. In the accompanying drawings:
Fig. 1 is a structural diagram of a surge protection device according to an embodiment of the present disclosure;
Fig. 2 is the first example structural diagram of a surge protection device according to an embodiment of the present disclosure;
Fig. 3 is the second example structural diagram of a surge protection device according to an embodiment of the present disclosure;
Fig. 4 is the third example structural diagram of a surge protection device according to an embodiment of the present disclosure; and
Fig. 5 is a structural diagram of a surge protection circuit according to an example embodiment of the present disclosure.

### Detailed Description of the Embodiments

It should be noted that the embodiments in the application and the characteristics in the embodiments may be combined with each other if there is no conflict. The present disclosure will be expounded below with reference to the accompanying drawings and in combination with the embodiments.

An embodiment of the present disclosure provides a surge protection device. The device includes a switch protector. The switch protector includes three or more electrodes, wherein the three or more electrodes are respectively connected to an N wire, a PE wire and one or more L wires of an alternating current system in parallel. In the embodiment, the number of the electrodes in the switch protector is not less than the total number of wires as mentioned above, i.e., the N wire, the PE wire and the one or more L wires, thereby ensuring that at least one different electrode of the switch protector is connected on each power wire in parallel respectively.

Whenever an inter-electrode voltage between any two electrodes in the three or more electrodes reaches a preset value, electric current is conducted between the two electrodes to generate a voltage drop, so as to absorb surge interference on a connected power wire.

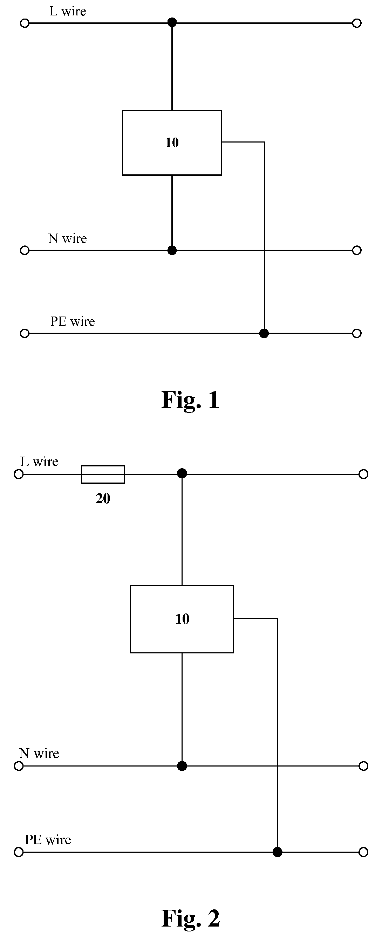

Fig. 1 is a structural diagram of a surge protection device according to an embodiment of the present disclosure. Fig. 1 shows connection relations between a switch protector 10 with three electrodes in the surge protection device and an L wire, an N wire and a PE wire of a single-phase alternating current system.

It needs to be noted that the surge protection device may also apply a switch protector with five electrodes to implement surge protection of a three-phase alternating current system based on connection relations similar to those shown in Fig. 1.

By means of the device, attenuation of a high frequency PLC signal can be prevented significantly by using a switch protector since a parasitic capacitance between electrodes of the switch protector is far smaller than a parasitic capacitance between two ends of a voltage dependent resistor. Besides, when surge interference exists, a voltage drop between an L wire and an N wire can be implemented by using the switch protector to provide differential-mode protection. In addition, when surge interference exists, a voltage drop between the L wire and the PE wire and a voltage drop between the N wire and the PE wire are implemented to provide common-mode protection simultaneously. Compared with a solution of implementing common-mode protection and differential-mode protection separately in a related technology, the present embodiment uses fewer devices while implementing the common-mode protection and the differential-mode protection simultaneously. Thus, the problem that a PLC signal is significantly attenuated when a voltage dependent resistor is directly bridged on a power wire can be solved by means of the device, and the quality of the PLC signal is guaranteed.

In an example embodiment, the switch protector 10 is a gas discharge tube which is also known as an air discharge device.

Fig. 2 is the first example structural diagram of a surge protection device according to an embodiment of the present disclosure. As shown in Fig. 2, in an example embodiment, the device further includes at least one fuse 20 connected on one or more L wires in series, wherein a voltage on each L wire is transmitted to the switch protector 10 through the at least one fuse 20. The at least one fuse 20 is used for implementing fuse protection for a circuit connected to the output of the alternating current system. As an example implementation, the at least one fuse 20 includes a current-limiting fuse or other circuit connecting devices including a material fusible at a high temperature.

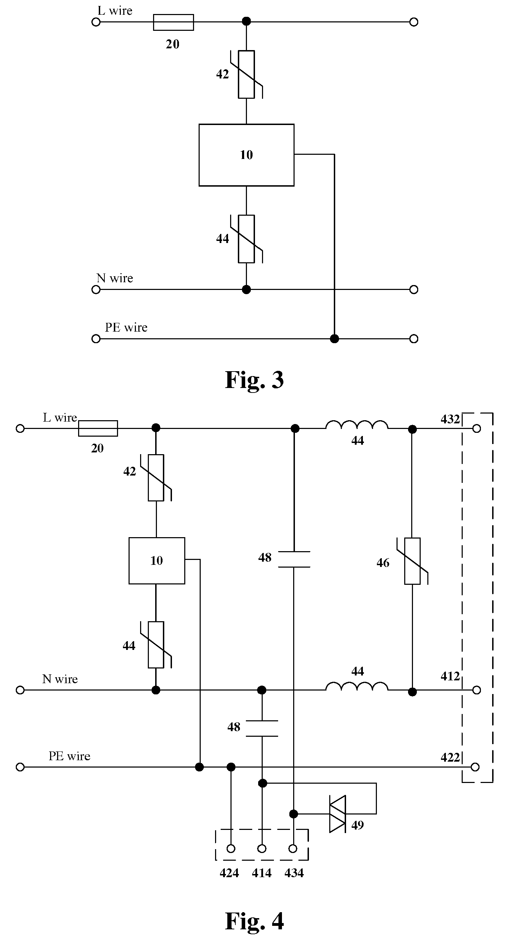

Fig. 3 is the second example structural diagram of a surge protection device according to an embodiment of the present disclosure. As shown in Fig. 3, at least one voltage dependent resistor is preferably connected in series between the L wire and the electrode connected in parallel with the L wire or between the N wire and the electrode connected in parallel with the N wire, so as to form a stable voltage drop between the L wire and the N wire through a nonlinear characteristic of the voltage dependent resistor. In an example embodiment, a parameter of the voltage dependent resistor 42 connected between the L wire and an electrode is the same as that of a voltage dependent resistor 44 connected between the N wire and an electrode, so that the voltage drop between the L wire and the corresponding electrode of the switch protector 10 is the same as that between the N wire and its corresponding electrode of the switch protector 10. The voltage dependent resistor is a voltage-limiting protection device. By using a nonlinear characteristic of the voltage dependent resistor, the voltage dependent resistor can clamp the voltage to a relatively fixed voltage value when the voltage appears between two electrodes of the voltage dependent resistor, thereby protecting a circuit of a post circuit.

Fig. 4 is the third example structural diagram of a surge protection device according to an embodiment of the present disclosure. In an example embodiment, outlet N wires 412 and 414 are guided out from a port of the N wire, wherein the port is connected with an electrode of the switch protector 10 in parallel; outlet PE wires 422 and 424 are guided out from a port of the PE wire, wherein the port is connected with an electrode of the switch protector 10 in parallel; outlet L wires 432 and 434 are guided out from a port of each L wire, wherein the port is connected with an electrode of the switch protector 10 in parallel. These outlet N wires, outlet PE wires and outlet L wires may be divided into two output groups. Taking a single-phase alternating current system for example, a first output group may include one outlet N wire 412, one outlet PE wire 422 and one outlet L wire 432, and a second output group may include: one outlet N wire 414, one outlet PE wire 424 and one outlet L wire 434.

The two output groups may be used for outputting a low frequency alternating current and a high frequency PLC signal respectively. It should be noted that the number of the output groups may not be limited to two. For example, a plurality of output groups used for outputting low frequency alternating currents or a plurality of output groups used for outputting high frequency PLC signals may be deployed. In this way, devices that require different degrees of surge protection may be protected respectively.

An output group used for outputting a low frequency alternating current and an output group used for outputting a high frequency PLC signal will be described respectively below.

As shown in Fig. 4, in an example embedment, a corresponding first output group used for outputting a low frequency alternating current may include: high frequency suppressors 44 respectively connected on an L wire and an N wire in the first output group in series, and configured to suppress a high frequency signal in the alternating current system to as to obtain an output alternating current. The high frequency suppressor 44 may include a decoupling circuit including an air coil inductor or other inductors, which presents a low impedance to an alternating current and presents a high impedance to a PLC signal, thereby isolating and suppressing the high frequency PLC signal.

In an example embodiment, the first output group further includes: a first surge suppressor 46, at least connected with the N wire and the L wire transmitting the output alternating current in the first output group and configured to suppress a surge generated on the outlet N wire and the outlet L wire transmitting the output alternating current. The first surge suppressor 46 may include at least one of the followings: a voltage dependent resistor, a Transient Voltage Suppressor (TVS) or a Thyristor Surge Suppressor (TSS). It needs to be noted that the first surge suppressor may alternatively be a voltage type switch protector having a plurality of electrodes like the switch protector 10, so as to implement common-mode protection and differential-mode protection for the N wire, the L wire and the PE wire respectively.

In an example embodiment, the corresponding second output group used for outputting a high frequency PLC signal includes: low frequency suppressors 48 respectively connected on the outlet L wire of each of the at least one L wire and the outlet N wire in the second output group in series, and configured to suppress a low frequency signal in the alternating current system so as to obtain an output signal. The low frequency suppressor 48 includes a coupling circuit. The coupling circuit includes a capacitor, such as a safety standard recognized high voltage-resistant ceramic capacitor, presenting a high impedance to an alternating current and a low impedance to a PLC signal, thereby isolating and suppressing a low frequency alternating current signal.

In an example embodiment, the second output group may further include: a second surge suppressor 49, at least connected with the outlet N wire and the outlet L wire transmitting the output signal in the second output group, and configured to suppress a surge generated on the outlet N wire and the outlet L wire transmitting the output signal. The second surge suppressor 49 may include a TVS.

The present embodiment further provides a surge protection method. The method is used for describing a working process of the foregoing surge protection devices, and may be described in combination with implementation of functions corresponding to the foregoing devices, and will not be described repeatedly here.

The method includes that when an inter-electrode voltage between two electrodes in at least three electrodes of a switch protector reaches a preset value, electric current is conducted between the two electrodes, wherein the at least three electrodes are respectively connected to an N wire, a PE wire and at least one L wire of an alternating current system in parallel.

In an example embodiment, the method further includes that an output alternating current and an output signal in output ends protected by the switch protector are separated; and surge protection is performed for the output alternating current and the output signal respectively.

Description and illustration will be provided below in combination with an example embodiment.

The example embodiment relates to a surge protection technology, and particularly to a surge protection circuit of an alternating current power port of a PLC terminal. Surge protection of a single-phase alternating current system will be described in the example embodiment.

The example embodiment provides a surge protection circuit of an alternating current power port of a PLC terminal. The surge protection circuit includes: one common port, one low frequency port, one high frequency port, one fuse device, one primary surge protection device, one coupling/decoupling circuit, one low frequency port secondary surge protection device, and one high frequency port secondary surge protection device.

The common port, which includes one L wire, one N wire and one PE wire, is connected with an alternating current network, and is configured to obtain an alternating current and transmit a PLC signal. The L wire, the N wire and the PE wire are provided with two branch wires respectively, wherein one set of branch wires forms the low frequency port (equivalent to the first output group) to transmit the alternating current to a power source conversion circuit of the PLC terminal and the other set of branch wires form the high frequency port (equivalent to the second output group) connected with a communication circuit of the PLC terminal to transmit the PLC signal.

The fuse device is connected on the L wire in series. One end of the fuse device is connected with the branching point on the L wire and the other end is connected with the common port. In an example embodiment, the fuse device is a current limiting fuse, or a circuit connecting device including a material fusible at a high temperature.

The primary surge protection device (equivalent to the switch protector 10) is bridged among the L wire, the N wire and the PE wire, and is provided with three connecting ends, two of which are connected with branching points on the L wire and the N wire and a middle end is connected with the PE wire. In the example embodiment, the primary surge protection device includes three surge protection devices, such as two voltage dependent resistors and one three-electrode gas discharge tube.

In an example embodiment, the two voltage dependent resistors have the same parameter, and one end of the voltage dependent resistors is connected with electrodes at two sides of the three-electrode gas discharge tube respectively.

In an example embodiment, two ends of the primary surge protection circuit are free ends of the voltage dependent resistors and the middle end of the primary surge protection circuit is an intermediate electrode of the three-electrode gas discharge tube.

The coupling/decoupling circuit includes: two decoupling devices (equivalent to the high frequency suppressors) and two coupling devices (equivalent to the low frequency suppressors). The decoupling devices are respectively connected in series on two branch wires which belong to the low frequency port and are connected with the L wire and the N wire respectively. One end of a decoupling device is connected to a branching point of a wire where the decoupling device is located and the other end is connected to the low frequency port. The coupling devices are respectively connected in series on two branch wires which belong to the high frequency port and are connected with the L wire and the N wire respectively. One end of a coupling device is connected with a branching point of a wire where the coupling device is located and the other end is connected to the high frequency port.

In an example embodiment, the decoupling devices are air coil inductors or other inductors, presenting a low impedance to an alternating current and a high impedance to a PLC signal.

In an example embodiment, the coupling devices are safety standard recognized high voltage-resistant ceramic capacitors, or other safety standard recognized high voltage-resistant resistors, presenting a high impedance to an alternating current and a low impedance to a PLC signal.

The low frequency port secondary surge protection device (equivalent to the first surge suppressor) is bridged on the two branch wires which belong to the low frequency port and are connected with the L wire and the N wire, and two ends of the low frequency port secondary surge protection device are connected with the low frequency port respectively.

In an example embodiment, the low frequency port secondary surge protection device includes: a surge protection device including one of the followings: a voltage dependent resistor, a TVS and a TSS.

The high frequency port secondary surge protection device (equivalent to the second surge suppressor) is bridged on the two branch wires which belong to the high frequency port and are connected with the L wire and the N wire. Two ends of the high frequency port secondary surge protection device are connected with the high frequency port respectively.

In an example embodiment, the high frequency port secondary surge protection device includes: a surge protection device, such as a bidirectional TVS.

Sufficient differential-mode and common-mode surge protection capabilities can be provided with almost no impact on the communication performance of the PLC terminal according to the example embodiments of the present disclosure. Besides, circuits are simple and fewer devices are required, thereby saving surge protection cost and reducing a structural space occupied by the protection circuit, which is beneficial for designing a miniature PLC terminal with low cost.

The surge protection circuit of the alternating current power port of the PLC terminal will be described below in combination with the accompanying drawings.

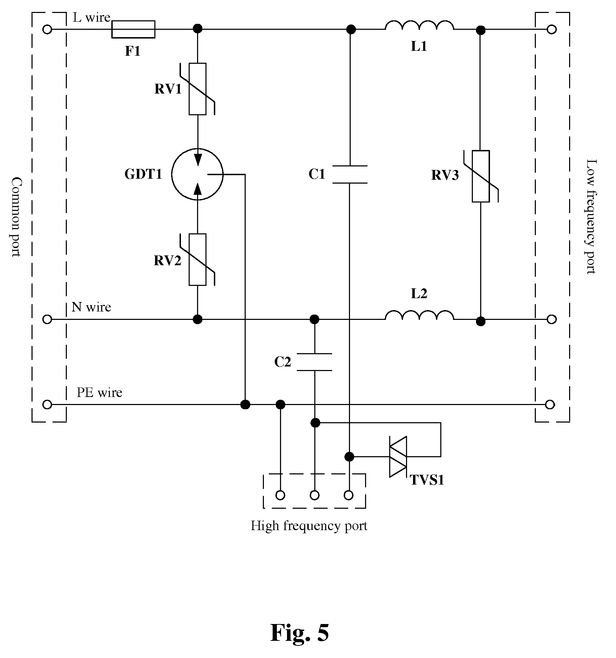

Fig. 5 is a structural diagram of a surge protection circuit according to an example embodiment of the present disclosure. As shown in Fig. 5:
A common port includes: one L wire, one N wire and one PE wire, is connected with an alternating current network and configured to obtain an alternating current and transmit a PLC signal. The L wire, the N wire and the PE wire are provided with two branch wires respectively, one of which forms a low frequency port to transmit the alternating current to a power source conversion circuit of the PLC terminal and the other one of which forms a high frequency port connected with a communication circuit of the PLC terminal to transmit the PLC signal.

A coupling/decoupling circuit includes: decoupling devices, which are inductors L1 and L2 respectively in the present example embodiment, connected in series on branch wires of the L wire and the N wire connected with the low frequency port; and coupling devices, which are capacitors C1 and C2 respectively in the present embodiment, connected in series on branch wires of the L wire and the N wire connected with the high frequency port. The PLC signal is prevented from passing while the alternating current is allowed be transmitted to the low frequency port through the inductors by utilizing the low impedance characteristics of the inductors under the low frequency alternating current and the high impedance characteristics under the high frequency PLC signal. The alternating current is prevented from passing while the PLC signal is allowed to be coupled between the high frequency port and the common port through the capacitors by utilizing the high impedance characteristics of the capacitors under the low frequency alternating current and the low impedance characteristics under the high frequency PLC signal. The coupling/decoupling circuit separates the alternating current and the PLC signal respectively to the low frequency port and the high frequency port, and merges the alternating current and the PLC signal on the common port.

A fuse device F1 is connected in series on the L wire. In the present example embodiment, the fuse device F1 is preferably a current fuse or a circuit connecting device formed by a material fusible at a high temperature. When a current on the L wire exceeds a certain limiting value within a certain period of time, the circuit is interrupted by the melting of the fuse device F1 so as to implement over-current protection.

A primary surge protection device is a combination of three surge protection devices. For example, the primary surge protection device as shown in Fig. 5 is a combination of two voltage dependent resistors RV1 and RV2 of the same specification and a three-electrode gas discharge tube GDT1. One end of the voltage dependent resistors RV1 is connected with a branching point on the L wire and the other end is connected with the electrode on one side of the three-electrode gas discharge tube GDT1. The electrode on the other side of the three-electrode gas discharge tube GDT1 is connected with one end of the voltage dependent resistor RV2, and the other end of the voltage dependent resistor RV2 is connected with a branching point on the N wire. An intermediate electrode of the three-electrode gas discharge tube GDT1 is connected with a branching point on the PE wire.

A low frequency port secondary surge protection device is a surge protection device, and is a voltage dependent resistor RV3 in Fig. 5, and may also be a TVR or a TSS according to different application requirements. Two ends of the voltage dependent resistor RV3 are respectively connected with the ends, which are close to the low frequency port, of inductors L1 and L2. The inductors L1 and L2 for preventing the PLC signal are also used for isolating the primary surge protection device and the secondary surge protection device to function as decoupling inductors.

The high frequency port secondary surge protection device is a surge protection device. For example, the high frequency port secondary surge protection device is a bidirectional TVS (TVS1) as shown in Fig. 5. Two ends of the TVS1 are respectively connected with the ends, which are close to the high frequency port, of capacitors C1 and C2.

Generally, a junction capacitance of a voltage dependent resistor is in a range of from several hundred Picofarads to several thousand Picofarads. However, a parasitic capacitance between the L wire and the N wire after the primary surge protection device is included in the circuit is series connection of parasitic capacitances of the two voltage dependent resistors RV1 and RV2 and a parasitic capacitance between the electrodes at the two sides of the three-electrode gas discharge tube GDT1. It can be learned from the principle of series connection of capacitances that the parasitic capacitance between the L wire and the N wire is smaller than the parasitic capacitance between the two electrodes at the two sides of the three-electrode gas discharge tube GDT1. The parasitic capacitance between the two electrodes at the two sides of the three-electrode gas discharge tube GDT1 is several Picofarads, or even smaller than 1 Picofarad, thus the primary surge protection device will hardly attenuate the high frequency PLC signal, and has nearly negligible impact on the communication performance of the PLC terminal. Since the inductors L1 and L2 prevent the high frequency PCL signal from passing, the parasitic capacitance of the secondary surge protection circuit at the output ends of the inductors L1 and L2 will not attenuate the PLC signal. Therefore, the low frequency port secondary surge protection device will not affect the communication performance of the PLC terminal. Since a parasitic capacitance of a TVS may be smaller than 1 Picofarad, the TVS serving as the high frequency port secondary surge protection device will hardly affect the PLC signal. In other words, the surge protection circuit provided by the example embodiment of the present disclosure will hardly affect the communication performance of the PLC terminal.

When there is only a working voltage on a power wire, voltages at two ends of the voltage dependent resistors and the gas discharge tube are smaller than their actuating voltages, thus the voltage dependent resistors and the gas discharge tube will not be actuated and accordingly, a high resistance state will be maintained, and normal operation of the circuit is hardly affected.

The primary surge protection device is actuated when a positive polarity common-mode surge interference occurs between the L wire and the PE wire and/or between the N wire and the PE wire of the power port of the PLC terminal. At the moment, surge energy on the L wire is released by the voltage dependent resistor RV1 and the three-electrode gas discharge tube GDT1 through the intermediate electrode of the GDT1, and surge energy on the N wire is released by the voltage dependent resistor RV2 and the three-electrode gas discharge tube GDT1 through the intermediate electrode of GDT1.

When a positive polarity common-mode surge interference occurs between the L wire and the N wire of the power port of the PLC terminal, the primary surge protection device is actuated because of a decoupling function of the inductors L1 and L2, and an obstructing function of the capacitors C1 and C2. At the moment, surge energy is released via the voltage dependent resistor RV1, the three-electrode gas discharge tube GDT1 and the voltage dependent resistor RV2. The secondary surge protection device starts to be actuated if a clamping voltage of the primary surge protection device is larger than an actuating voltage of the secondary surge protection device. At the moment, the remaining surge energy flowing to the low frequency port is released through a voltage dependent resistor RV3, and the remaining surge energy flowing to the high frequency port is released through the voltage dependent resistor RV1.

After the surge interference on the power port of the PLC terminal disappears, the voltage dependent resistors recover to a high resistance state, and the gas discharge of the gas discharge tube effectively quenches to recover to an off-state without affecting normal working of the circuit.

A principle of releasing negative polarity surge interference is the same as that of releasing positive polarity surge interference, and will not be described repeatedly here.

The primary surge protection device uses a circuit in which the voltage dependent resistors and the gas discharge tube are connected in series, thus a relatively low actuating voltage may be selected for a voltage dependent resistor under the premise that a peak current and a leakage current of the voltage dependent resistor can meet the requirements, thus clamping voltages of the voltage dependent resistors are also relatively low.

In common-mode surge protection, a clamping voltage of the primary surge protection device is the sum of a clamping voltage of a single voltage dependent resistor (RV1 or RV2) and a voltage (a voltage between the electrode at one side and the intermediate electrode) of the gas discharge tube GDT1 after the gas discharge tube GDT1 discharges. An appropriate type of the device can be selected to ensure the voltage to be smaller than a withstand voltage level of a post device easily, thereby satisfying a requirement of a protection capability.

In differential-mode protection, a clamping voltage of the primary surge protection device is the sum of clamping voltages of two voltage dependent resistors (RV1 and RV2) and a voltage (a voltage between the electrode at one side and the intermediate electrode) of the gas discharge tube GDT1 after the gas discharge tube GDT1 discharges. The voltage is approximately twice the clamping voltage in the common-mode surge protection. Protection is implemented by further protection of the secondary protection device.

To sum up, common-mode surge protection is implemented by a primary surge protection device and differential-mode protection is implemented by a secondary surge protection device by means of the surge protection circuit of a power port of a PLC terminal according to the embodiments and example embodiments of the present disclosure. The protection circuit has almost no impact on PLC communication capability, and the circuit is simple and highly reliable with less protection devices, thereby saving cost of the circuit and reducing a structural space occupied by the circuit.

### Industrial Applicability

By means of the embodiments of the present disclosure, electric current is conducted between two electrodes of the at least three electrodes of a switch protector when an inter-electrode voltage between the two electrodes reaches a preset value. The problem that a PLC signal is significantly attenuated when a voltage dependent resistor is directly bridged on a power wire is solved by a method of connecting the at least three electrodes to an N wire, a PE wire and at least one L wire of an alternating current system in parallel respectively, thereby guaranteeing the quality of the PLC signal on the power wire.

The above are only example embodiments of the present disclosure, and are not used for limiting the present disclosure. For those skilled in the art, the present disclosure may have various alterations and variations. Any modification, equivalent replacement, improvement and so on made within the principle of the present disclosure should be included within the scope of protection defined by the claims of the present disclosure.

## Claims

1. A surge protection device, comprising:
a switch protector with at least three electrodes and configured to, when an inter-electrode voltage between two electrodes of the at least three electrodes reaches a preset value, conduct electric current between the two electrodes, wherein the at least three electrodes are respectively connected to a Null, N, wire, a Protection Earth, PE, wire and at least one Live, L, wire of an alternating current system in parallel.

2. The device as claimed in claim 1, wherein the device further comprises:
at least one fuse, connected on the at least one L wire in series, wherein a voltage on the at least one L wire is transmitted to the switch protector through the at least one fuse.

3. The device as claimed in claim 1, wherein at least one of the at least three electrodes is connected with the at least one L wire through at least one first voltage dependent resistor respectively, and one of the other electrodes in the at least three electrodes is connected with the N wire through a second voltage dependent resistor, wherein a parameter of the first voltage dependent resistor is the same as a parameter of the second voltage dependent resistor.

4. The device as claimed in any one of claims 1 to 3, wherein output ends of the N wire comprise at least two outlet N wires, output ends of the PE wire comprise at least two outlet PE wires and output ends of each of the at least one L wire comprise at least two outlet L wire respectively, wherein the at least two outlet N wires, the at least two outlet PE wire and the at least two outlet L wires of each of the at least one L wire form at least two output groups.

5. The device as claimed in claim 4, wherein a first output group in the at least two output groups comprises:
high frequency suppressors, respectively connected on the outlet L wire of each of the at least one L wire and the outlet N wire in the first output group in series, and configured to suppress a high frequency signal in the alternating current system to obtain an output alternating current.

6. The device as claimed in claim 5, wherein the first output group further comprises:
a first surge suppressor, at least connected with the outlet N wire and the outlet L wire transmitting the output alternating current in the first output group in parallel, and configured to suppress a surge generated on the outlet N wire and the outlet L wire transmitting the output alternating current.

7. The device as claimed in claim 4, wherein a second output group in the at least two output groups comprises:
low frequency suppressors, respectively connected on the outlet L wire of each of the at least one L wire and the outlet N wire in the second output group in series, and configured to suppress a low frequency signal in the alternating current system to obtain an output signal.

8. The device as claimed in claim 7, wherein the second output group further comprises:
a second surge suppressor, at least connected with the outlet N wire and the outlet L wire transmitting the output signal in the second output group in parallel, and configured to suppress a surge generated on the outlet N wire and the outlet L wire transmitting the output signal.

9. A surge protection method, comprising:
when an inter-electrode voltage between two electrodes in at least three electrodes of a switch protector reaches a preset value, conducting electric current between the two electrodes, wherein the at least three electrodes are respectively connected to a Null, N, wire, a Protection Earth, PE, wire and at least one Live, L, wire of an alternating current system in parallel.

10. The method as claimed in claim 9, wherein the method further comprises:
separating an output alternating current and an output signal in output ends protected by the switch protector;
performing surge protection for the output alternating current and the output signal respectively.
